(19)

Europäisches Patentamt

European Patent Office

Office européen des brevets

(11) **EP 3 812 567 A1**

(12) **EUROPEAN PATENT APPLICATION**

(43) Date of publication:
**28.04.2021 Bulletin 2021/17**

(21) Application number: **19205416.1**

(22) Date of filing: **25.10.2019**

(51) Int Cl.:
*F02D 29/02* (2006.01)  *F02D 41/00* (2006.01)
*F02D 19/02* (2006.01)  *F02D 19/06* (2006.01)
*F02D 19/08* (2006.01)  *F02D 19/10* (2006.01)
*F02D 9/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **DiGas, sia
2016 Jurmala (LV)**

(72) Inventor: **DUMENKO, Petro
LV-2016 Jurmala (LV)**

(74) Representative: **Osmans, Voldemars et al
Agency Tria Robit
P.O. Box 22
LV-1010 Riga (LV)**

(54) **LOCOMOTIVE DIESEL ENGINE CONTROL METHOD AND SYSTEM**

(57)    A method of controlling a locomotive diesel engine using a three-component fuel mixture consisting of gaseous and liquid fuels and air in which the diesel is controlled by simultaneously changing the amount of gaseous and liquid fuels supplied to the cylinders, while the amount of air is determined by the amount of supplied fuels in such a way as to ensure that the excess air coefficient is maintained at a given range. As well as a locomotive diesel engine comprising a liquid fuel injection system, a gas fuel injection system and an air supply system to the cylinders, and a power control system which contains a throttle valve installed in the intake manifold.

Fig. 1

EP 3 812 567 A1

**Description**

The invention relates to methods for controlling locomotive diesel engines powered by a three-component fuel mixture consisting of gaseous and liquid fuels and air.

**Background art**

Currently, locomotives driven by internal combustion engines are widely used in railway transport. Most commonly locomotives use diesel type internal combustion engines - diesel engines. More recently, diesel engines that use a three-component fuel mixture consisting of gaseous and liquid fuels and air have been developed.

A known method for controlling the rotational speed and power of a diesel engine using combination of gaseous and diesel fuels is described in the Latvian patent LV14700B, in which both diesel fuel and natural gas are supplied to the engine. Diesel fuel is injected directly into combustion camera and gas is injected into the air intake. Mentioned method suggests that proportion of diesel fuel should be at minimum levels to ensure stable ignition dose and the remaining quantity of the diesel fuel is substituted with natural gas.

Absence of air intake control may result in poor combustion stability and higher natural gas consumption and higher levels of exhaust emissions consequently especially at low engine loads typically characterized by high air excess. Additionally, engine dynamic performance and durability can be compromised due to narrow air to fuel ratio required to efficient gas combustion as that opposed to diesel fuel.

A known method for controlling the power of a diesel engine is described in the Russian patent RU2689658, in which diesel fuel, gas and air are supplied to the engine, while the gas - air ratio is supported at near optimal value in a wide range of loads proportionally the load.

Supporting gas-air ratio a certain value can lead to inefficient diesel fuel combustion, especially at transient modes; optimal value of gas - air ration means that the amount of the air will not be sufficient for full diesel fuel combustion and will result in high exhaust emissions levels; near optimal gas-air ratio under wide range of loads will provide to increased combustion pressure and temperature and may lead to the engine damage. Further, in this method, natural gas is delivered to the engine using "fumigation" method in common air intake. That significantly reduces engine dynamic response and creates risks for safety and engine durability.

The purpose of the invention is to improve the dynamic, economic and environmental parameters of a locomotive diesel engine using a three-component fuel mixture consisting of gaseous and liquid fuels and air.

**Summary of invention**

The proposed method is based on simultaneous combustion of diesel and gas fuels by supplying a three-component fuel mixture consisting of gas and liquid fuel and air to the engine. The engine power and speed are controlled by simultaneously changing the amount of gas and liquid fuels supplied to the cylinders, and the amount of air supplied to the cylinders is determined by the amount of supplied fuels to ensure that the coefficient of excess air (air-fuel ratio) is maintained in a predetermined range. The diesel fuel is injected directly into combustion camera via mechanical or electronically controlled diesel fuel system and the gas is injected directly into combustion camera or air intake of each cylinder close to intake air valves of each individual cylinder, sequentially and phased accordingly to each cylinder current position. The amount of the air is controlled by electronically controlled throttle body and turbocharger bypass valve when required.

As opposed to the method described in RU2689658, the proposed method doesn't imply "quantitative or Otto cycle" principle of gas - air mixture regulation only. The fast response of the engine to the applied load is ensured by changing the amount of diesel and gas fuels within one cylinder stroke, which is typical for modern diesel engine management, while the proportion of diesel and gas fuels is regulated to ensure high quality of combustion process at current operational conditions, including diesel and gas to air ratio, combustion pressure and temperatures, probability of knock process. After load based engine demands are satisfied, the quantity of air mass is adjusted based on values of fuels injection quantity, which is similar to Otto cycle management. The air to fuel ratio and proportion of diesel and gas fuels in the mixture are determined by maximum allowable combustion pressure and temperature and knock and misfire mitigation strategy.

The proposed method ensures high quality combustion process along with optimal consumption of diesel and gas fuels while avoids excessive fuel consumption, excess combustion pressure and knock during engine operation at constant and transient modes.

The technical result is achieved in that, in a locomotive diesel engine using a three-component fuel mixture consisting of gaseous and liquid fuels and air, the diesel is controlled by simultaneously changing the amount of gas and liquid fuels supplied to the cylinders, and the amount of air supplied to the cylinders is determined by the amount of the supplied fuels such so as to ensure that the coefficient of excess air is maintained in a predetermined range, which allows to avoids excessive fuel consumption, excess combustion pressure and knock during engine operation at set and transient modes.

It is desirable to maintain excess air to gas-diesel fuel ratio in the range from 22:1 to 35:1.

Maintaining the excess air to gas fuel ratio in this range on the one hand allows achieving most complete combustion of gas fuel and on the other hand provides reliable conditions for ignition of the fuel.

It is technically feasible to provide the required amount of air entering the engine cylinders by changing the position of the throttle valve and turbocharger bypass valve.

It is preferable, to use feedback from the lambda sensor installed in the exhaust tract of the engine, for maintain the excess air coefficient since lambda sensor allows to precisely determine the amount of excess oxygen in the exhaust gas (combustion products)

It is desirable to control combustion pressure and temperature for each cylinder's cycle. It allows to adjust gas - diesel fuels ratio to minimize diesel fuel constituent while avoiding knock and misfire and adjust air - fuel ratio for required combustion parameters of diesel and gas fuels in order to achieve highest fuel efficiency while ensuring engine safety and durability. It is preferably to use mathematical model of the engine and cylinder pressure sensors or combination of both to determine each cylinder's pressure.

It is preferable to control exhaust gas temperature for each of the engine cylinders. This allows detecting sub optimal combustion process and avoiding the engine damage by adjusting the quantity and proportions of diesel and gas fuels and air.

It is preferable to use combustion pressure and exhaust gases temperature control to adjust the quantity and proportions of diesel and gas fuels and air in order to achieve better exhaust gas emissions levels for environmental and health benefits.

It is preferable to use the first PID controller in the control loop, which adjusts the engine power depending on discrepancies in rotation speed.

It is also preferable to use a second PID controller in the control loop, which change the supply of diesel fuel depending on discrepancies detected in rotation speed.

In addition, it is most preferable for the first and second PID controllers to operate simultaneously. The advantage of using PID controllers is that by implying required settings, it is possible to facilitate the stability of constant modes and the convergence of transient engine operation modes.

When controlling power, it is advantageous to use distributed phased gas injection to precisely dose the amount of the gas fuel for each cylinder and change the homogeneity of the gas-air mixture depending on the engine operating mode. This prevents gas slip during intake and exhaust valves overlap, and ensures fast engine response and full gas fuel combustion at low loads for maximum efficiency and allows avoiding knock occurrence at high loads.

Another aspect of the claimed invention is a locomotive diesel engine designed to use a three-component fuel mixture consisting of gas and liquid fuels and air, comprising a liquid fuel injection system, a gas fuel injection system, an air supply system to the diesel cylinders, and a control system, characterized in that the control system contains a throttle valve installed in the intake manifold.

Preferably, the control system allows adjusting the amount of air entering the engine cylinders by changing the position of the throttle.

It is desirable that the control system contains a first PID controller that changes the engine power depending on the rotation speed discrepancy and / or a second PID controller that changes the diesel supply depending on the rotation speed discrepancy. The simultaneous use of both PID controllers is preferred.

**Brief description of drawings**

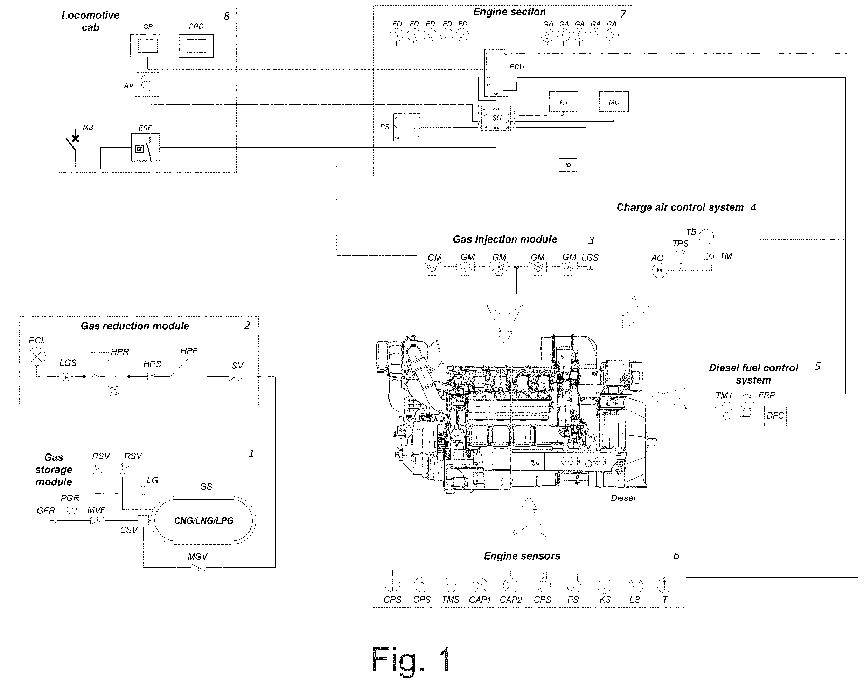

Figure 1 shows the structural-functional diagram of the control system of a locomotive diesel engine.

**Detailed description of the invention**

One of the possible systems for applying the inventive method is depicted in figure 1 and may consists of the following components.

Electronic devices: MS - Main switch; ESF - Emergency Power Shut-off Unit; CP - Control panel; AV - Ampere-voltmeter; FGD - Fire and gas detection system; ECU - Electronic control unit; SU - Switching unit; PS - Power supply; RT - Rheostat; MU - Measurement unit; ID - Gas injectors driver; FD - Fire detector; GA - Gas analyzer.

Gas equipment: GFR - Gas filling receptacle; PGR - Refueling line pressure gauge; PGL - Gas reduction module pressure gauge; MVF - Manual valve fueling line; MGV - high pressure gas line valve; SV - Solenoid valve; CSV- Cylinder solenoid valve; RSV- Relief valve; LG - Level Gauge; GS - Gas storage; HPF - Gas filter; HPS - High pressure gas sensor; LGS - Low pressure gas sensor; HPR - Pressure regulator; GM - Gas injection module.

Executive mechanisms for controlling the supply of air and diesel fuel: TB - Electronically controlled throttle body; TM - Transmission mechanism; AC - Actuator; TPS - Throttle position sensor; TM1 - gear mechanism; FRP - diesel fuel control mechanism position sensor (if applicable); DFC - Diesel fuel controller.

Engine Sensors: CPS - Crankshaft Position Sensor; PS - Phase Sensor; T - Thermocouple of the cylinder; LS - Lambda sensor; KS - Knock sensor; CAP1 - charge air pressure sensor installed in front of the charge air control mechanism; CAP2 - charge air pressure sensor installed behind the charge air control mechanism, TMS - multiply engine fluid sensors, CPS - combustion pressure sensors.

To create a gas-air fuel mixture supplied to the cylinder at all operating modes of a dual-fuel engine, a distributed phased gas injection through electromagnetic injectors - admission valves (gas injection module 3) is used, which makes it possible to dynamically change its qualitative composition and homogeneity. Thus in low-load operating modes, due to long injection times, this method of preparing a fresh charge allows it to achieve high homogeneity, which leads to an improvement in the complete combustion of gas fuel, an increase in the energy conversion efficiency of the engine compared to operation in diesel fuel mode, and also a relatively low THC (Total Hydro Carbons) content in exhaust gases. At medium and high engine loads, a knock phenomenon may occur, the invented engine control system uses gas injection modules to change the homogeneity of the air-gas mixture, providing a layered mixture formation to prevent the formation of knock phenomenon. Feedback to control the occurrence of the knock process is carried out by a knock sensor (KS) and cylinder thermocouples installed on the engine (T).

The operation of the dual-fuel engine control system is based on the interaction of the ECU control system software with the listed sensors (6) with the control actuators (4) and (5): gas injection module, throttle actuator, diesel fuel controller (actuator of the fuel rack in case of mechanical fuel systems or electronic control unit for Common Rail, pump injectors or other electronically controlled fuel systems), rheostat.

The control system operates as follows:

From the gas storage module 1, gas under high pressure enters the gas reduction module 2 (Fig. 1), in which it is purified and the pressure is reduced. The gas reduction module is equipped with a manual valve MVF, a filter for gas purification HPF and a pressure regulator to lower the gas pressure HPR. High gas pressure is measured by the HPS sensor, low - by the LGS sensor. Low gas pressure is also visually controlled using the pressure gauge PGL. From the gas reduction module 2, gas with low pressure enters the gas injection modules 3, which supply gas directly to the inlet channels of the diesel cylinder head. By means of gas injectors and mixers GM, the system provides distributed phased gas injection into each individual cylinder at the intake stroke after closing the exhaust valves.

In order to achieve and maintain the rotational speed set by the engine driver controller position and ensure transient processes of the engine, the main control unit reads the analog and digital signals of the sensors, forming, based on their values, reference values based on the basic control matrices and controller algorithms, as well as control signals on the executive mechanism.

Basic control matrices are a set of 2D and 3D and more dimensional tabular data and are synthesized for each internal combustion engine from unique values of parameters and indicators obtained as a result of measures to adapt the control system by: calculations using a mathematical model; during rheostatic or bench tests of a locomotive; full-scale engine operational tests on a vehicle.

The formation of control signals in the described system happens as follows:

The operation of the ECU algorithm is cyclical. At the beginning of the algorithm cycle which is synchronized with the engine duty cycle, the required mass cyclic supply of diesel fuel is determined by tabular interpolation according to the corresponding base matrix based on the values received from the crankshaft rotational speed sensor (CPS) and the feedback sensor of executive mechanism controlling the feed rate of diesel fuel (FRP). The determination of the required mass cyclic supply of gas fuel is carried out using the base matrix of cyclic gas supply, depending on: type of gas fuel; the opening time of the valves of the actuators of the gas injection module (3); values of pressure and gas temperature obtained from pressure and temperature sensors (HPS) and (LGS) in the gas pipeline.

The current value of the coefficient of excess air is determined by the signals of the sensors of the coefficient of excess air (lambda probes (LS)), or, in case of their failure, on the basis of analytical relationships between the values of the filling coefficient, cyclic supply of diesel fuel, cyclic supply of gas fuel, pressure and charge air temperature. The current value of the fill factor is determined from the base matrix of the fill factor and depends on the pressure and temperature of the charge air obtained from the pressure and air temperature sensors (CAP1) and (CAP2), respectively.

Adjustments of the mass of the oxidizing agent (air), which is supplied to the combustion chamber is controled by the acurator (AC and TM) by moving the rotary throttle (TB) in accordance with the methods of quantitative mixture formation depending on the current engine power. Feedback control of the current position of the shutters is provided by a special sensor of their position TPS.

To calculate the current power value of the internal combustion engine, the power values that are introduced by diesel and gas fuel are determined. The current power introduced by diesel fuel is determined from the power matrix of the engine operating in diesel cycle and depends on the mass cyclic supply of diesel fuel, the crankshaft rotation speed and the excess air coefficient for diesel fuel. The current power introduced by the gas fuel is determined from the gas fuel power matrix, the value of which depends on the current values of the crankshaft rotation speed, the cyclic supply of gas fuel and the coefficient of excess air for gas fuel. The total current power value of the internal combustion engine will be the sum of the power values introduced by gas and diesel fuel.

Having determined the total current internal combustion engine power, the control system transfers the obtained values to the PID-controller power and rotation speed algorithms to determine the required cyclic feeds of gas and diesel fuels, as well as the required mass value of air supplied to the cylinder, in order to maintain the given rotation speed and engine power in reaction to external and internal disturbances. The ECU algorithm recalculates the value of the required cyclic gas supply to the corresponding signal of the opening time of the gas injection module injectors, the opening moment of which is determined by the phase sensor (PS), the value of the required cyclic supply of diesel fuel is recalculated to the corresponding control signal for executive mechanism that control the value of diesel fuel cyclic supply in accordance with the method of qualitative mixture formation, and the required mass value of the air supply is recalculated to the signal of the angle of rotation of the throttle valve, in accordance with the method of quantitative mixture formation.

The operation of the system in set conditions, provided that the power generated by the engine is equal to the power consumed, is determined in the following way.

The ECU sends a positioning signal to executive mechanism rail of Injection Pump (5), which provides the cyclic diesel fuel supply specified for this mode of operation. The gas injection module (3) receives a signal from the ECU, which provides the cyclic gas supply required to create the specified engine power. The throttle valve executive mechanism (4) receives a positioning signal from the ECU, providing the required air flow rate to create a gas-air mixture of a quality that is defined for this operating mode. It is calculated using the following formula:

$$G_{AIR} = K_{layer} B_{cycle}^{GF} AFR^{GF} + B_{cycle}^{DF} AFR^{DF} , (1)$$

where $K_{layer}$ is the stratification coefficient of the charge, $B_{cycle}^{GF}$, $B_{cycle}^{DF}$ is the value of the cyclic supply of gas and diesel fuel, respectively, calculated by the ECU according to the algorithm described above; $AFR^{GF}$ is the constant of the air-fuel ratio for gas, $AFR^{DF}$ is the air-fuel ratio for diesel fuel, the value of which is calculated by the ECU by tabular interpolation of the base matrix $AFR^{DF} = f(n, Ne)$. In this case, the throttle opening angle set by the actuator is a function of the calculated value $G_{AIR}$.

During engine operation at low loads, the gas injection unit creates a homogeneous mixture and the charge stratification coefficient in the formula is $K_{layer} = 1$. This method of preparing a fresh charge allows achieving complete combustion of gas fuel, which leads to an increase in its energy conversion efficiency, and also reduces the content of unburned hydrocarbons in the exhaust gases.

The difference in engine operation in steady-state conditions at high loads has the following feature. The signal from the ECU to the gas injection module (3), which provides the cyclic gas supply necessary to create the required engine power, is formed discretely, with a frequency of about 150 Hz and a filling width of 50%. Such an event allows for 3-5 gas injections into the inlet channel of the cylinder head per intake stroke. In the inlet channel, the gas is "picked up" by the passing air and, entering the cylinder, creates a layer of rich mixture, which, while the gas valve is closed, is "covered" with a layer of clean air. Thus, alternating layers of a fresh mixture with a high and low concentration of an oxidizing agent are formed in the cylinder (combustion chamber) of the engine, which prevents the rapid propagation of combustion pressure waves, slows down the combustion process and prevents knock, ensuring the engine runs below the threshold of the work process rigidity. At the same time, a positioning signal from the ECU is supplied to the throttle valve executive mechanism (4). This signal provides an air flow rate slightly higher than that required to create a homogeneous gas-air mixture of the same qualitative constitution, that is, considering the value $K_{layer} > 1$ in formula (1).

Stable engine operation at steady-state equilibrium conditions is provided by algorithms of electronic PID controllers of the crankshaft rotation speed and power, embedded in the ECU.

The PID power controller is designed to maintain a constant engine power depending on the position of the controller in the presence of external disturbances. It represents an algorithm implemented in an ECU program in accordance with the following formula

$$\Delta R = K_D^P \left( \Delta n(t) - \Delta n(t - T) \right) + K_P^P \Delta n(t) + K_I^P \sum_{i=1}^{N} \Delta n(t - iT) + K^P \left( n_S(t) - n_S(t - T) \right), (2)$$

where $\Delta R$ is the required absolute change in the resistance of the rheostat of the main generator (PT), $t$ is the current time; $\Delta n(t) = n(t) - n_S(t)$ - rotation speed discrepancy ( $n(t)$ - actual rotation speed, $n_S(t)$ - rotation speed set by the position of the controller (setpoint)), $n_S(t - T)$ - rotation speed setpoint for the previous duty cycle ( $T = 120/n(t - T)$ - engine duty

cycle period), $\Delta n(t - T)$ - rotation speed discrepancy in the previous duty cycle, $\Delta n(t - iT)$ if i = 1 ... N - residuals of the rotation frequency in N previous operating cycles.

When engine load is changing, this algorithm, according to formula (2), changes the resistance value of the rheostat of the main generator (PT), which leads to a change in the power it produces, and hence the engine power. So, with a decrease in the load removed from the engine, its rotation speed increases. The discrepancy $\Delta n$ becomes positive and the regulator reduces the resistance of the generator rheostat by the amount of $\Delta R$, which leads to an increase in the power of the main generator, and hence an increase in engine power. With increasing load, the reverse process occurs. Thus, maximum use of engine power is achieved. The stability of this regulator is determined by the selection of coefficient values $K_D^P$, $K_P^P$, $K_I^P$ (see formula (2)). It should be noted that in both cases the quantity $n_S(t) - n_S(t - T) = 0$, and the last component in formula (2) does not work.

The power controller works in parallel with the rotation speed controller, which when the engine load increases, increases the cyclic flow, and vice versa.

The PID rotation speed controller is designed to maintain the set position of the controller of the driver of the crankshaft rotation speed $n_S$ in the presence of external disturbances. It is an algorithm implemented in an ECU program and is based on the following formula

$$\Delta B_{CYCLE}^{DF} = -K_D^S \left( \Delta n(t) - \Delta n(t-T) \right) - K_P^S \Delta n(t) - K_I^S \sum_{i=1}^{N} \Delta n(t-iT), (3)$$

where $\Delta B_{CYCLE}^{DF}$ is the required absolute change in the cyclic supply of diesel fuel.

Upon detection of an external disturbance (for example, a change in the load applied to the engine the engine), the PID controller algorithm in accordance with formula (3) changes the cyclic supply of diesel fuel to the cylinder. So, when the load on the engine decreases, its rotation speed increases, the discrepancy $\Delta n$ becomes positive and the regulator reduces the cyclic supply of diesel fuel $B_{CYCLE}^{DF}$, thereby reducing the excess engine power, which leads to a decrease in the current rotation speed $n$. With increasing load on the engine, the reverse process takes place. The stability of the equilibrium operating mode of the engine is determined by the selection of coefficient values $K_D^S$, $K_P^S$, $K_I^S$ (see formula (3)).

Thus, during the joint reaction of the PID power controller and the PID rotation speed controller to an external disturbance, the engine returns to operation at the initial (before disturbance) set-state.

After reaching the equilibrium static mode, which is characterized by the value $\sum_{i=1}^{N} \left[ \Delta n(t-iT) \right]^2 < 1$ for the ECU, if necessary, the gas fuel supply is corrected based on the matrix $B_{CYCLE}^{GF} = f(n, Ne)$. In parallel, there is a process of changing the air supply in accordance with formula (1) described above.

In addition, the control system ensures engine operation in transient conditions caused by external or internal disturbances.

An external disturbance is a change in engine load. Moreover, the control system works as if ensuring stable operation in the set-state, which is described above.

An internal disturbance is a change in the position of the controller of the driver. In this case, the system operates as follows.

Changing the position of the controller changes the rotation speed $n_S$ setting, the value of which is read in the ECU. In accordance with formula (2), a one-time change in the resistance of the rheostat R (power) of the main generator PT occurs by the amount $\Delta R$ determined by a special coefficient $K^P$, which is set in the form of a tabular function $K^P = f(n)$ and in the current value is determined by interpolating it. At the same time, the PID rotation speed controller, in accordance with formula (3), gradually changes the cyclic supply of diesel fuel by the amount $\sum \Delta B_{CYCLE}^{DF}$ necessary to achieve the required rotation speed $n_S$. For example, when transferring the controller from a lower to a higher position, the set rotation speed $n_S$ and power of the main generator increase. The value $n_S(t) - n_S(t - T)$ becomes positive, and the discrepancy $\Delta n$ becomes negative. As a result, the PID power controller (formula (2)) works out to reduce the resistance R of the generator rheostat (PT), and the PID rotation speed controller (formula (3)) works out to increase the cyclic supply of diesel fuel $B_{CYCLE}^{DF}$. As a result, both engine power and its rotation speed increase. When transferring the controller from the highest position to the lowest, the reverse process occurs. The combined action of these regulators continues until an equilibrium static mode is reached, which for ECU is characterized by the value

$$\sum_{i=1}^{N}\left[\Delta n\left(t-iT\right)\right]^{2}<1.$$ After that, if necessary, the correction of the supply of gas fuel is performed based on the matrix $B_{CYCLE}^{GF}=f\left(n,Ne\right)$. In parallel, a process of changing the air supply takes place in accordance with the formula (1) described above.

The convergence and the required quality of the transition processes of the control system is ensured by selection of coefficients $K_{D}^{S}$, $K_{P}^{S}$, $K_{I}^{S}$, $K_{D}^{P}$, $K_{P}^{P}$, $K_{I}^{P}$ in formulas (2) and (3).

Thus, an important distinguishing feature of the proposed method is that it combines both quantitative and qualitative mixture formation methods depending on the engine current operational conditions and limitations set by the control system.

The proposed method of controlling the power of a locomotive diesel engine provides the required balance of power in the engine-load system when using a three-component fuel mixture (air - gas - diesel fuel) and is based on a combination of methods of regulating the power of internal combustion engines carried out using the main electronic control unit, special actuators, a set of sensors, as well as gas equipment.

This method differs from the known ones in that the power is controlled by simultaneously changing the amount of both gas and liquid fuels supplied to the cylinder, while a constant coefficient of excess air is maintained with respect to the cyclic supply of gas and diesel fuels over the entire range of static and dynamic engine operation modes.

The method can be implemented both for hydromechanical fuel supply systems, and for systems with electric-valve control (pump nozzles, CommonRail and other diesel fuel supply systems).

At the same time, the required quality of the mixture is determined by high-speed and power modes of engine operation and is ensured by the simultaneous dynamic adjustment of the cyclic supply of diesel and gas fuels in required proportions using the signals of the main control unit to the electric actuator of the diesel injection module and gas injection module, respectively.

The required amount of fresh charge entering the engine cylinder is ensured by the throttle installed in the intake manifold and depends on the current values of gas and diesel fuels consumption, parameters of charge air, engine speed, mode of operation and current combustion parameters. The corresponding signal to the throttle actuator is generated by the main control unit and is based on the calculation algorithm and basic control matrices, readings of temperature and pressure sensors of charge air, crankshaft rotation speed, etc. At the same time, to ensure optimal gas-air composition in both static and dynamic modes of operation of a locomotive diesel engine, feedback from the excess air ratio sensor is used (broadband lambda probe).

In addition, the considered fuel supply system that implements the claimed method of power control allows to achieve complete combustion of fuel when the engine is running at low loads, which is not possible when using only qualitative mixture formation, and to avoid the occurrence of knock and excess combustion pressure, when the engine is running at high load, but also incomplete diesel fuel combustion and high exhaust emissions levels, which is a problem during implementation of the quantitative mixture formation method.

**Claims**

1. A method for controlling a locomotive diesel engine powered by a three-component fuel mixture consisting of gaseous and liquid fuels and air, **characterized in that** control of the diesel is carried out by simultaneously changing the amount of gaseous and liquid fuels supplied to the diesel cylinders, while the amount of air supplied to the cylinders is determined depending on the amount of the supplied fuels in such a way as to ensure that the excess air coefficient is maintained in a given range.

2. The method for controlling a locomotive diesel engine according to claim 1, wherein the excess air coefficient is maintained in the range from 22:1 to 35:1 in relation to the fuels.

3. The method for controlling a locomotive diesel engine according to claim 1 or 2, in which the required amount of air entering the engine cylinder is provided by changing the position of the throttle valve installed in the air intake manifold.

4. The method for controlling a locomotive diesel engine according to claim 3, in which feedback from a lambda sensor is used to determine the maintenance of the coefficient of excess air in the specified limits.

5. The method for controlling a locomotive diesel engine according to one of the preceding claims, in which a first PID controller is used to change the engine power depending on the discrepancy of the rotational speed.

6. The method for controlling a locomotive diesel engine according to one of the preceding claims, in which a second PID controller is used to change the supply of diesel fuel depending on the discrepancy of the rotational speed.

7. The method of controlling a locomotive diesel engine according to claim 6, in which the first and second PID controllers operate simultaneously.

8. The method for controlling a locomotive diesel engine according to one of the preceding claims, in which a distributed phased gas injection is used to precisely dose the amount of the gas fuel for each cylinder and change the homogeneity of the gas-air mixture depending on the engine operating mode.

9. The method for controlling the power of a locomotive diesel engine according to paragraph 8, which uses feedback from the knock sensor and, when a knock process occurs, the homogeneity of the gas-air mixture decreases.

10. A locomotive diesel engine designed to use a three-component fuel mixture consisting of gas and liquid fuels and air, comprising a liquid fuel injection system, a gas fuel injection system, an air supply system to the engine cylinders, and a diesel power control system, **characterized in that** the power control system contains a throttle valve installed in the intake manifold.

11. The locomotive diesel engine according to claim 10, in which the control system allows adjusting the amount of air entering the engine cylinders by changing the position of the throttle valve.

12. A locomotive diesel engine according to claim 10 or 11, in which the control system comprises a first PID controller that changes the engine power depending on the discrepancy of the rotational speed.

13. A locomotive diesel engine according to claim 10 or 11, in which the control system comprises a second PID controller that changes the supply of diesel fuel depending on the discrepancy of the rotational speed.

14. A locomotive diesel engine according to claim 10 or 11, in which the control system contains the first and second PID controllers.

Europäisches
Patentamt

European
Patent Office

Office européen
des brevets

# EUROPEAN SEARCH REPORT

Application Number

EP 19 20 5416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/213363 A1 (PRUEMM FRANZ WERNER [DE]) 22 August 2013 (2013-08-22) | 1,3,4,10 | INV.<br>F02D29/02 |
| Y | * paragraphs [0006] - [0009], [0036] - [0045]; figure 1 * | 2,5-9 | F02D41/00<br>F02D19/02<br>F02D19/06 |
| X | WO 2014/094156 A1 (WESTPORT POWER INC [CA]) 26 June 2014 (2014-06-26) | 10-14 | F02D19/08<br>F02D19/10 |
| Y | * paragraphs [0023] - [0035]; figures 3,4,6,7 * | 5-7 | F02D9/02 |
| Y | US 6 273 076 B1 (BECK NIEL LENANNES [US] ET AL) 14 August 2001 (2001-08-14)<br>* column 2, lines 43-61 * | 2 | |
| Y | US 2017/089273 A1 (THOMAS ROBERT J [US] ET AL) 30 March 2017 (2017-03-30)<br>* paragraphs [0045] - [0048] * | 8,9 | |
| A | US 2015/176509 A1 (LAVERTU THOMAS MICHAEL [US] ET AL) 25 June 2015 (2015-06-25)<br>* paragraphs [0040] - [0043]; figures 1-3 * | 1-14 | |

TECHNICAL FIELDS
SEARCHED      (IPC)

F02D

The present search report has been drawn up for all claims

| Place of search | Date of completion of the search | Examiner |
|---|---|---|
| The Hague | 27 March 2020 | Deseau, Richard |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

&: member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 19 20 5416

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2020

| Patent document cited in search report | | Publication date | Patent family member(s) | | Publication date |
|---|---|---|---|---|---|
| US 2013213363 | A1 | 22-08-2013 | BR 102013003749<br>CN 103256127<br>DE 102012002948<br>EP 2628922<br>RU 2013106807<br>US 2013213363 | A2<br>A<br>A1<br>A1<br>A<br>A1 | 18-08-2015<br>21-08-2013<br>22-08-2013<br>21-08-2013<br>20-08-2014<br>22-08-2013 |
| WO 2014094156 | A1 | 26-06-2014 | US 2015308366<br>WO 2014094156 | A1<br>A1 | 29-10-2015<br>26-06-2014 |
| US 6273076 | B1 | 14-08-2001 | US 6273076<br>US 6474323 | B1<br>B1 | 14-08-2001<br>05-11-2002 |
| US 2017089273 | A1 | 30-03-2017 | NONE | | |
| US 2015176509 | A1 | 25-06-2015 | NONE | | |

EPO FORM P0459

For more details about this annex : see Official Journal of the European Patent Office, No. 12/82

**EP 3 812 567 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- LV 14700 B
- RU 2689658